# EUROPÄISCHE PATENTSCHRIFT

(11) **EP 2 763 864 B1**
(45) Veröffentlichungstag und Bekanntmachung des Hinweises auf die Patenterteilung: **23.09.2015**
(21) Anmeldenummer: 12766983.6
(22) Anmeldetag: 02.10.2012
(51) Int. Cl.: B60G 17/052, B60G 11/27, F16F 9/04, F16F 9/05

(54) **LUFTFEDERDECKEL MIT ZUSCHALTBAREM LUFTVOLUMEN**
AIR SPRING COVER WITH SWITCH-BASED AIR VOLUME
CHAPEAU D'AMORTISSEUR PNEUMATIQUE AVEC VOLUME D'AIR RACCORDABLE

(30) Priorität: 06.10.2011 DE 102011084101; 12.01.2012 DE 102012200388
(43) Veröffentlichungstag der Anmeldung: 13.08.2014
(73) Patentinhaber: Continental Teves AG&Co. Ohg, 60488 Frankfurt (DE)
(72) Erfinder: PIELOCK, Ralf, 29690 Essel (DE)
(86) Internationale Anmeldenummer: PCT/EP2012/069491
(87) Internationale Veröffentlichungsnummer: WO 2013/050385

(56) Entgegenhaltungen:
- EP-A1- 1 344 957
- EP-A2- 2 246 206
- DE-A1- 10 236 621
- DE-A1-102005 054 370
- DE-A1-102006 033 198
- JP-A- 11 303 919
- US-A- 5 413 316

## Beschreibung

Die Erfindung betrifft einen Luftfederdeckel einer Luftfeder eines Kraftfahrzeugs.

Freistehende Luftfedern bestehen aus einem Abrollkolben und einem Luftfederdeckel, welche durch einen Luftfederbalg miteinander verbunden sind, wobei der Luftfederbalg in einem karosserieseitigen Klemmbereich am Luftfederdeckel und in einem fahrgestellseitigen Klemmbereich am Abrollkolben mittels Klemmringen fixiert ist. Die Luftfeder weist dabei in der Regel nur ein einziges Luftvolumen auf.

Im Stand der Technik schon existierende Luftfederdeckel mit integriertem Schaltventil, welche in einem Schaltzustand des Schaltventils ein Zuschalten eines zweiten im Luftfederdeckel vorhandenes Luftvolumen ermöglichen, weisen eine hohe Komplexität der Bauweise unter Verwendung zahlreicher Bauteile und eine dementsprechende komplexe Herstellungsmethode auf, was in vielen Fällen aufgrund primären Einsatzes von Metallwerkstoffen in einem überhöhten Gewicht des Luftfederdeckels resultiert. Den Stand der Technik bezüglich Luftfedern mit zweiteiligem Luftfederdeckel geben die Druckschrifte DE 10 2006 033 198 A1, DE 10 2005 054 370 A1, DE 102 36 621 A1 und US 5413316 A wieder.

Demgegenüber liegt der Erfindung die Aufgabe zugrunde, einen verbesserten Luftfederdeckel zu schaffen.

Die der Erfindung zugrunde liegende Aufgabe wird mit den Merkmalen des unabhängigen Patentanspruchs gelöst. Bevorzugte Ausführungsformen der Erfindung sind in den abhängigen Patentansprüchen angegeben.

Es wird eine Luftfeder für Fahrwerke von Fahrzeugen geschaffen, umfassend einen Luftfederdeckel und einen Abrollkolben, wobei der Luftfederdeckel und der Abrollkolben durch einen Luftfederbalg verbunden sind, wobei der Luftfederdeckel einen ersten karosserieseitigen Klemmbereich und einen zweiten kolbenseitigen Klemmbereich für den Luftfederbalg aufweist, wobei der erste und der zweite Klemmbereich dazu ausgebildet sind, einen ersten und einen zweiten Klemmring zum Klemmen des Luftfederbalgs aufnehmen, wobei der erste Klemmring und der zweite Klemmring dazu ausgebildet sind, den Luftfederbalg am Luftfederdeckel zu fixieren,
wobei der Abrollkolben und der Luftfederbalg in ihrem Innenraum ein gemeinsames erstes Luftvolumen aufweisen, wobei der Abrollkolben an seinem fahrwerkseitigem Ende einen dritten Klemmbereich aufweist, wobei der dritte Klemmbereich dazu ausgebildet ist, einen dritten Klemmring aufzunehmen, wobei der dritte Klemmring dazu ausgebildet ist, das erste Luftvolumen gegenüber der äußeren Umgebung abzudichten, wobei der Luftfederdeckel ein zweites Luftvolumen aufweist, wobei der Luftfederbalg eine Außenwandung des ersten und des zweiten Luftvolumens bildet, so dass das erste und das zweite Luftvolumen gegenüber einer äußeren Umgebung abgedichtet werden, wobei der zweite Klemmring so angeordnet ist, dass das erste Luftvolumen räumlich von dem zweiten Luftvolumen getrennt ist, wobei der Luftdeckel dazu ausgebildet ist, ein Schaltventil aufzunehmen, welches dazu ausgebildet ist, in einem Schaltzustand einen ersten Luftpfad zwischen dem ersten und dem zweiten Luftvolumen zu ermöglichen, so dass das zweite Luftvolumen zum ersten Luftvolumen zuschaltbar ist.

Dies kann den Vorteil haben, dass durch das schaltbare Zusatzvolumen eine größere Spreizung der Luftfedersteifigkeit darstellbar ist. Dadurch, dass durch die formschlüssig anliegenden Klemmringe am karosserieseitigen Deckelrand und am abrollkolbenseitigen Deckelrand das im Innenbereich des Luftfederdeckels befindliche zweite Luftvolumen gegenüber einer äußeren Umgebung abgedichtet wird, kann der zusätzlich zur Verfügung stehende Bauraum im Innern des Luftfederdeckels als ein zusätzliches zweites Luftvolumen zur Veränderung der Federcharakteristik der pneumatischen Feder genutzt werden. Die Funktion der pneumatischen Feder wird üblicherweise durch das von Abrollkolben und Luftfederbalg eingeschlossene erste Luftvolumen umgesetzt. Ausführungsformen der Erfindung bewerkstelligen das Zuschalten des zusätzlichen zweiten Luftvolumens zum ersten Luftvolumen durch luftdichten Einbau eines Schaltventils in den Luftfederdeckel. Durch Steuerung der Schaltzustände des Schaltventils kann somit die Federcharakteristik, insbesondere die Federsteifigkeit der pneumatischen Feder noch mehr gespreizt und gleichzeitig stärker nuanciert werden.

Gleichzeitig würde die Bauweise des Luftfederdeckels vereinfacht werden. Indem der Luftfederbalg nicht wie sonst üblich nur bis zum unteren Rand des Luftfederdeckels gezogen wird, sondern noch weiter in Richtung Karosserie bis zum oberen Rand des Luftfederdeckels, erübrigen sich die sonst üblichen Bauteile des Luftfederdeckels. Das Gewicht des Luftfederdeckels reduziert sich dadurch erheblich in vorteilhafter Weise. Eine kompakte Bauweise des Luftfederdeckels erübrigt sich durch die beschriebene Ausführungsform. Es entsteht ein zusätzlicher Raum im Innenbereich des Luftfederdeckels, der nicht durch Bauteile des Luftfederdeckels verbraucht wird, sondern anderweitig genutzt werden kann.

Die Verwendung des gleichen Luftfederbalgs zur Abdichtung des ersten und des zweiten Luftvolumens impliziert, dass keine zusätzlichen Bauelemente zur Abdichtung gegen eine äußere Umgebung erforderlich sein könnten. Weiteres Material wird gespart und der Herstellungsprozess noch mehr vereinfacht. Es sind keine zusätzlichen Arbeitsgänge für ein Verschweißen oder ein Verkleben erforderlich. Die Anzahl der Herstellungsprozesse und damit die Herstellungskosten werden reduziert.

Nach einer Ausführungsform der Erfindung ist das Schaltventil ferner dazu ausgebildet, an seiner Außenwand einen ersten und einen zweiten O-Ring aufzunehmen, wobei der erste O-Ring dazu ausgebildet ist, das zweite Luftvolumen gegen eine äußere Umgebung abzudichten, wobei der zweite O-Ring dazu ausgebildet ist, das zweite Luftvolumen gegen das erste Luftvolumen abzugrenzen.

Dies kann den Vorteil haben, dass zwei getrennte Luftvolumina innerhalb der Luftfeder vollständig voneinander und von einer äußeren Umgebung abgetrennt sind. Durch Zuschalten des zweiten Luftvolumens im Innern des Luftdeckels kann das zweite Luftvolumen in den Betrieb der pneumatischen Feder miteinbezogen werden. Die Federcharakteristik der Luftfeder kann den Anforderungen hinsichtlich des Fahrzeugbetriebs und dem Beladungszustand des Fahrzeugs weitgehend angepasst werden.

Nach einer Ausführungsform der Erfindung ist der der Luftfederdeckel dazu ausgebildet, einen zweiten Luftpfad zwischen dem ersten Luftvolumen und der äußeren Umgebung unter Umgehung des zweiten Luftvolumens und unter Umgehung des Schaltventils zu ermöglichen.

Dies kann den Vorteil haben, dass unter Umgehung des zweiten Luftvolumens und unter Umgehung des Schaltventils ein eventuell herrschender Unter- oder Überdruck von Luft des ersten Luftvolumens durch Austausch mit Luft aus der äußeren Umgebung direkt kompensiert werden kann. Sollte die Luftfeuchtigkeit der eintretenden Luft beispielsweise sehr hoch sein, so würden das Schaltventil im Luftfederdeckel oder sonstige Metallteile im Luftfederdeckel zunächst vor Feuchtigkeit aus der eintretenden Luft weitgehend geschützt. Einer möglichen Korrosion von Schaltventil und Metallteilen im Luftfederdeckel würde durch Umgehung des zweiten Luftvolumens beim Befüllen des zweiten Luftvolumens mit Umgebungsluft effektiv vorgebeugt. Ausführungsformen der Erfindung könnten z.B. in Form eines Standard-Luftanschlusses, der luftdicht vom zweiten Luftvolumen abgetrennt, den Luftfederdeckel von einer Außenseite des Luftfederdeckels bis zum Deckelunterrand in Richtung des ersten Luftvolumens durchzieht, einen direkten Austausch von Luft aus dem ersten Luftvolumen mit Umgebungsluft ermöglichen.

Nach einer Ausführungsform der Erfindung ist das Schaltventil ferner dazu ausgebildet, einen dritten Luftpfad zwischen dem ersten Luftvolumen und der äußeren Umgebung zu ermöglichen.

Dies kann den Vorteil haben, dass ein Austausch von Luft aus der äußeren Umgebung und der Systemluft aus dem ersten Luftvolumen automatisiert und durch einen bestimmten Schaltzustand des Schaltventils definiert geregelt werden könnte. Eine Selbst-Regulation des Drucks im ersten Luftvolumen wäre somit möglich.

Nach einer Ausführungsform der Erfindung weist der Luftfederdeckel mindestens einen Bestandteil aufweist, wobei der mindestens eine Bestandteil des Luftfederdeckels ein Kunststoffspritzteil und/oder ein Metallteil ist.

Dies kann den Vorteil haben, dass die einfache Bauart des Luftfederdeckels, bei welchem die Außenumrandung primär durch den in Richtung der Karosserie verlängerten Teil des Luftfederbalgs gebildet wird, ein je nach verfügbarem Bauraum notwendiges stabilisierendes Stützgerüst in Form eines beliebig geformten Kunststoffspritzteils oder eines beliebig gegossenen Metallteils erlaubt. Ausführungsformen der Erfindung zeigen somit eine beliebige Ausgestaltung des Luftfederdeckels und damit eine breite Einsetzbarkeit in viele Fahrzeugtypen. Somit könnte beispielsweise ein Luftfederdeckel ein inneres Stützgerüst in Form von radial angeordneten Rippen aufweisen, um einerseits dem Luftfederdeckel eine Struktur zu. geben und andererseits einen weiteren Hohlraum für ein zweites Luftvolumen zur Verfügung zu stellen, welches dem pneumatischen Aktuatorensystem zugeschaltet werden könnte. Ein solches beispielhaftes Rippensystem im Luftfederdeckel würde auch eine stabile Fixierung des Schaltventils im Luftfederdeckel ermöglichen.

Bestünden Ausführungsformen der Erfindung beispielsweise nur aus einem Kunststoffspritzteil, würde der Herstellungsprozess wesentlich erleichtert und beschleunigt werden können. Bestünde das innere Gerüst des Luftfederdeckels beispielsweise vollständig aus Kunststoff, ergäbe sich eine signifikante Gewichtsersparnis im Vergleich zu einer kompakten Bauweise des Luftfederdeckels aus Metallbestandteilen. Gewichtsanforderungen an den Luftfederdeckel könnten somit wesentlich leichter eingehalten werden.

Nach einer Ausführungsform der Erfindung sind der erste und der zweite Klemmring bezüglich ihres Durchmessers und/oder ihrer Höhe identisch oder unterschiedlich ausgeprägt.

Dies kann den Vorteil haben, dass im Falle, dass Durchmesser und Höhe des ersten und des zweiten Klemmrings identisch sind, der Herstellungsprozess wesentlich vereinfacht wird. Beispielsweise könnten bei der Montage die gleichen Klemmbacken zur Befestigung des Luftfederbalgs an den Luftfederdeckel verwendet werden. Dieses könnte sogar auf der gleichen Klemmmaschine unmittelbar nacheinander erfolgen.

Im Falle, dass Durchmesser und Höhe des ersten und des zweiten Klemmrings unterschiedlich sind, könnte eine maximale Anpassung der Form des Luftfederdeckels an verfügbarem Bauraum im Fahrzeug ermöglicht werden.

Nach einer Ausführungsform der Erfindung sind der Luftfederdeckel und der Abrollkolben durch einen Bajonettverschluss, durch Zusammenschrauben, durch Zusammenkleben und/oder durch Zusammenklemmen miteinander verbunden.

Dies kann den Vorteil haben, dass je nach verfügbarem Bauraum eine geeignete Methode gewählt werden kann, den Luftfederdeckel mit dem unteren Teil der Luftfeder zu verbinden. Stünde z.B. wenig verfügbarer Bauraum im Fahrzeug zum Einbau einer Luftfeder zur Verfügung, wäre z.B. ein innerer und äußerer Bajonettverschluss eine geeignete Verbindungsmethode, um einen axialen Zusammenhalt zu gewährleisten. Ein Bajonettverschluss würde auch eine später vielleicht notwendige Trennung des Luftfederdeckels von dem unteren Teil der Luftfeder ermöglichen, eine Verschweißung hingegen nicht. Bei mehr verfügbarem Bauraum böte sich beispielsweise eine weitere Klemmverbindung an. Je nach verfügbarem Bauraum im Fahrzeug und je nach den betrieblichen und baulichen Anforderungen an die Luftfeder, könnte die geeignete Verbindungsart gewählt werden.

Nach einer Ausführungsform der Erfindung weist der Luftfederdeckel mindestens zwei Bestandteile auf, wobei die Bestandteile miteinander fest verschweißt sind.

Dies kann den Vorteil haben, dass der Luftfederdeckel beispielsweise mehrere Bestandteile mit unterschiedlichen Funktionen aufweisen könnte, wobei die Bestandteile durch Verschweißen fest zueinander in ihrer Position fixiert wären. Gleichzeitig würden luftdicht voneinander abgedichtete Kompartimente für Luftkammern geschaffen. Insbesondere würde das zweite Luftvolumen luftdicht gegenüber dem ersten Luftvolumen und gegenüber der äußeren Umgebung abgedichtet. Durch ein Verschweißen der einzelnen Bestandteile würden formschlüssige und gleichzeitig luftdichte Verbindungen zwischen den Einzelteilen geschaffen. Eine weitere Abdichtung unter Nutzung weiterer Bauelemente, welche weiteres Gewicht verursachen würden, wäre nicht mehr notwendig.

Nach einer Ausführungsform der Erfindung weist der Luftfederbalg mindestens eine Lage von Gewebefestigkeitsträgern auf, wobei die Gewebefestigkeitsträger Fadenverstärkungen aufweisen, wobei eine Vorzugsachse der Fadenverstärkungen parallel, senkrecht oder schräg zu einer Längsachse der Luftfeder verläuft.

Dies kann den Vorteil haben, dass der Luftfederbalg, welcher mit seinem der Karosserie zugewandten Teil die Außenumrandung des Luftfederdeckels bildet, verschiedenen Anforderungen bezüglich eines Ausgleichs von quer zur Längsachse der Luftfeder wirkenden Kräften durch Wahl einer geeigneten Ausführungsform des Luftfederbalgs standhalten könnte. Zum Ausgleich von Torsionsbewegungen und/oder kardanischen Bewegungen würde sich als Ausführungsform ein Balg mit parallel zur Längsachse der Luftfeder gerichteten Fadenverstärkungen in einer oder mehreren Lagen, sogenannten Axiallagen, eignen. Sollte der Schwerpunkt hingegen auf Komfortanforderungen bezüglich Abfederung der Karosserie liegen, wäre eine Ausführungsform des Luftfederbalgs mit Kreuzlagen geeignet, bei welchen Vorzugsrichtungen der Fadenverstärkungen schräg zur Längsachse der Luftfeder verlaufen und bei welchen die Vorzugsrichtungen der Fadenverstärkungen sich netzartig überkreuzen. Bei einer Ausführungsform des Luftfederbalgs mit senkrecht zur Längsachse der Luftfeder gerichteten Fadenverstärkungen in einer oder mehreren Lagen, einer sogenannten 90° Wickeltechnik hingegen könnten ein empfindliches Dehnungs- und Spannungsverhalten der Luftfeder im Fokus stehen.

Ausführungsformen der Erfindungen würden auch eine Ausführung des Luftfederbalgs als einen Hybridbalg erlauben, bei dem im abrollkolbenseitigen Bereich eine Ausführung des Luftfederbalgs in Kreuzlagentechnik und im karosserieseitigen Bereich eine Ausführung in Axiallagentechnik realisierbar wäre. Bei einem solchen hier möglichen Hybridbalg könnten üblicherweise sich ausschließende Präferenzen bei der Schwerpunktlegung auf Kompensation von Torsions- und kardanischen Bewegungen oder auf maximale Erfüllung von Komfortanforderungen bezüglich der Abfederung der Karosserie beide in vorteilhafter Weise kombiniert werden.

Nach einer Ausführungsform der Erfindung sind der erste und der zweite Klemmbereich durch Rippen radial versteift.

Dies kann den Vorteil haben, dass der erste und der zweite Klemmring zur Befestigung des Luftfederbalgs an den Luftfederdeckel fest gegen einen festes Gerüstteil des Luftfederdeckels gepresst werden können und diese beiden Verbindungen damit stabil und luftdicht bleiben. Während der größte Teil der Außenumrandung des Luftfederdeckels im Wesentlichen aus einem Teil des elastischen und nachgiebigen Luftfederbalgs mit niedrigem Elastizitätsmodul besteht, weisen der erste und der zweite Klemmbereich mit den Rippen aus Kunststoff oder aus Metall als versteifende Elemente ein hohes Elastizitätsmodul auf. Eine feste Verklemmung zwischen Luftfederdeckel und Luftfederbalg sowie ein luftdichtes Abdichten des zweiten Luftvolumens zum ersten Luftvolumen und zur äußeren Umgebung bleiben damit gewährleistet.

Nach einer Ausführungsform der Erfindung liegt der zweite Luftpfad zwischen dem ersten Luftvolumen und der äußeren Umgebung innerhalb einer Rippe der Rippen.

Dies kann den Vorteil haben, dass eine Luftzuführung von einer äußeren Umgebung zum ersten Luftvolumen geschützt in einer steifen Rippe aus Kunststoff oder Metall liegt. Zum zweiten Luftvolumen im Innern des Luftfederdeckels hat die Luftzuführung keinerlei Kontakt. Sollte die Luftzuführung eventuell undicht sein, könnte trotzdem keine Luft von der äußeren Umgebung über diese Luftzuführung in das zweite Luftvolumen strömen, weil eine Ummantelung der Luftzuführung durch die Rippe dieses verhindern würde.

Nach einer Ausführungsform der Erfindung können Formen des Luftfederdeckels, des Abrollkolbens und/oder des Luftfederbalgs einem Einbaubereich in einem Fahrzeug angepasst werden.

Dies kann den Vorteil haben, dass eine höchstmögliche Anpassungsfähigkeit der Bauform der Luftfeder mitsamt Luftfederdeckel an einen vorgegebenen Einbaubereich im Fahrzeug gewährleistet werden könnte. Durch geeignete Formgebungen des Luftfederdeckels, des Abrollkolbens und/oder des Luftfederbalgs könnte eine Luftfeder z.B. mittels einfacher Haltenasen in ein Fahrzeug eingebaut werden. Sämtliche Fahrzeugtypen kommen somit als Anwendungsbereich in Betracht.

Nach einer Ausführungsform der Erfindung ist der Luftfederbalg zwischen dem ersten und dem zweiten Klemmring zu einer Falte ausgebildet.

Dies kann den Vorteil haben, dass durch die Ausbildung einer Falte des Luftfederbalgs zwischen dem ersten und dem zweiten Klemmbereich der erste Klemmring im ersten Klemmbereich statisch entlastet würde. Dieser erste Klemmring, welcher nicht nur den Luftfederbalg am karosserieseitigen Teil des Luftfederdeckels fixiert, sondern auch das zweite Luftvolumen gegen die äußere Umgebung abdichtet, könnte aufgrund statischer Entlastung durch die Rollfalte in seiner Ausführungsform kleiner gestaltet werden. Dies impliziert nicht nur Materialersparnis, Gewichtsreduzierung des Luftfederdeckels, sondern auch eine weitere Flexibilität bei der Formgebung des Luftfederdeckels.

In einem weiteren Aspekt betrifft die Erfindung ein Kraftfahrzeugfahrwerk mit mindestens einer Luftfeder, umfassend einen Luftfederdeckel und einen Abrollkolben, wobei der Luftfederdeckel und der Abrollkolben durch einen Luftfederbalg verbunden sind, wobei der Luftfederdeckel einen ersten karosserieseitigen Klemmbereich und einen zweiten kolbenseitigen Klemmbereich für den Luftfederbalg aufweist, wobei der erste und der zweite Klemmbereich dazu ausgebildet sind, einen ersten und einen zweiten Klemmring zum Klemmen des Luftfederbalgs aufnehmen, wobei der erste Klemmring und der zweite Klemmring dazu ausgebildet sind, den Luftfederbalg am Luftfederdeckel zu fixieren, wobei der Abrollkolben und der Luftfederbalg in ihrem Innenraum ein gemeinsames erstes Luftvolumen aufweisen, wobei der Abrollkolben an seinem fahrwerkseitigem Ende einen dritten Klemmbereich aufweist, wobei der dritte Klemmbereich dazu ausgebildet ist, einen dritten Klemmring aufzunehmen, wobei der dritte Klemmring dazu ausgebildet ist, das erste Luftvolumen gegenüber der äußeren Umgebung abzudichten, wobei der Deckel ein zweites Luftvolumen aufweist, wobei der Luftfederbalg eine Außenwandung des ersten und des zweiten Luftvolumens bildet, so dass das erste und das zweite Luftvolumen gegenüber einer äußeren Umgebung abgedichtet werden, wobei der zweite Klemmring so angeordnet ist, dass das erste Luftvolumen räumlich von dem zweiten Luftvolumen getrennt ist, wobei der Luftdeckel dazu ausgebildet ist, ein Schaltventil aufzunehmen, welches dazu ausgebildet ist, in einem Schaltzustand einen ersten Luftpfad zwischen dem ersten und dem zweiten Luftvolumen zu ermöglichen, so dass das zweite Luftvolumen zum ersten Luftvolumen zuschaltbar ist.

In einem weiteren Aspekt betrifft die Erfindung ein Kraftfahrzeugfahrzeug mit Karosserie und Fahrwerk mit mindestens einer Luftfeder, umfassend einen Luftfederdeckel und einen Abrollkolben, wobei der Luftfederdeckel und der Abrollkolben durch einen Luftfederbalg verbunden sind, wobei der Luftfederdeckel einen ersten karosserieseitigen Klemmbereich und einen zweiten kolbenseitigen Klemmbereich für den Luftfederbalg aufweist, wobei der erste und der zweite Klemmbereich dazu ausgebildet sind, einen ersten und einen zweiten Klemmring zum Klemmen des Luftfederbalgs aufnehmen, wobei der erste Klemmring und der zweite Klemmring dazu ausgebildet sind, den Luftfederbalg am Luftfederdeckel zu fixieren, wobei der Abrollkolben und der Luftfederbalg in ihrem Innenraum ein gemeinsames erstes Luftvolumen aufweisen, wobei der Abrollkolben an seinem fahrwerkseitigem Ende einen dritten Klemmbereich aufweist, wobei der dritte Klemmbereich dazu ausgebildet ist, einen dritten Klemmring aufzunehmen, wobei der dritte Klemmring dazu ausgebildet ist, das erste Luftvolumen gegenüber der äußeren Umgebung abzudichten, wobei der Deckel ein zweites Luftvolumen aufweist, wobei der Luftfederbalg eine Außenwandung des ersten und des zweiten Luftvolumens bildet, so dass das erste und das zweite Luftvolumen gegenüber einer äußeren Umgebung abgedichtet werden, wobei der zweite Klemmring so angeordnet ist, dass das erste Luftvolumen räumlich von dem zweiten Luftvolumen getrennt ist, wobei der Luftdeckel dazu ausgebildet ist, ein Schaltventil aufzunehmen, welches dazu ausgebildet ist, in einem Schaltzustand einen ersten Luftpfad zwischen dem ersten und dem zweiten Luftvolumen zu ermöglichen, so dass das zweite Luftvolumen zum ersten Luftvolumen zuschaltbar ist.

Im Folgenden werden bevorzugte Ausführungsformen der Erfindung anhand der folgenden Zeichnungen näher erläutert. Es zeigen:
- Figur 1: Luftfeder mit Luftfederdeckel im Längsschnitt,
- Figur 2:: Luftfederdeckel im Längsschnitt.

Im Folgenden werden einander ähnliche Elemente mit den gleichen Bezugszeichen gekennzeichnet.

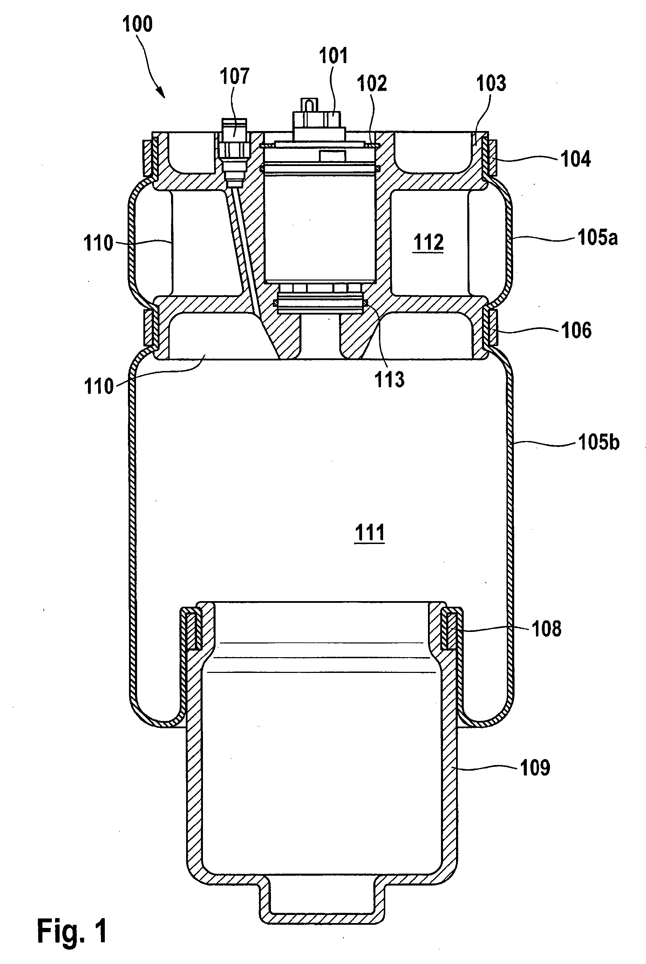

Die Figur 1 zeigt eine Luftfeder 100 mit einem Luftfederdeckel 103 im Längsschnitt. Der Luftfederdeckel 103 wird mit dem Abrollkolben 109 durch einen Luftfederbalg 105a, 105b verbunden. Befestigt ist der Luftfederbalg 105a in einem ersten Klemmbereich mittels eines ersten Klemmrings 104 am karosserieseitigen Rand des Luftfederdeckels 103. Im Übergangsbereich vom Luftfederdeckel 103 zum Abrollkolben 109 erfolgt die Befestigung des Luftfederbalgs 105a in einem zweiten Klemmbereich mittels eines zweiten Klemmrings 106. Weiterhin ist der Luftfederbalg 105b in einem dritten Klemmbereich mittels eines dritten Klemmrings 108 direkt am Abrollkolben 109 befestigt.

Der Abrollkolben 109 und ein Teil des Luftfederbalgs 105b umschließen ein erstes Luftvolumen 111. Dadurch, dass der Luftfederbalg 105a nicht wie sonst üblich bis zum unteren Rand des Luftfederdeckels 103, sondern bis zum oberen karosserieseitigen Rand des Luftfederdeckels 103 bezogen ist, wird eine Außenwandung des Luftfederdeckels 103 durch den Luftfederbalg 105a gebildet. Dadurch, dass der erste Klemmring 104 formschlüssig auf dem oberen karosserieseitigen Rand des Luftfederdeckels 103 luftdicht anliegt und dadurch, dass der zweite Klemmring 106 formschlüssig und luftdicht im Bereich des zweiten Klemmbereichs am Luftfederdeckel anliegt, wird ein gegen eine äußere Umgebung und gegen das erste Luftvolumen luftdicht abgeschlossenes zweites Luftvolumen im inneren Bereich des Luftfederdeckels 103 gebildet.

Ausführungsformen der Erfindung weisen somit einen Luftfederdeckel 103 auf, der im Vergleich zu sonst üblichen kompakten Bauweisen einen Hohlraum aufweist, welcher luftdicht ein zweites Luftvolumen für den Betrieb und die Funktionsweise der Luftfeder zur Verfügung stellen könnte. Zum Zuschalten dieses zweiten Luftvolumens weist der Luftfederdeckel 103 weiterhin ein Schaltventil 101 auf, welches in einem Schaltzustand einen ersten Luftpfad 115 zwischen dem ersten und dem zweiten Luftvolumen ermöglicht. Durch Zuschalten des zweiten Luftvolumens 112 zum ersten Luftvolumen 111 kann die Federcharakteristik der Luftfeder 100 dahingehend verändert werden, dass die Steifigkeit der Luftfeder über einen größeren Bereich gespreizt werden kann.

Dadurch, dass der erste Klemmring 104 und der zweite Klemmring 106 formschlüssig den Luftfederbalg 105 an den Luftfederdeckel 103 fixieren, ergibt sich eine luftdichte Abdichtung gegen eine äußere Umgebung. Zusätzliche Bauteile zur Abdichtung entfallen somit.

Der Luftfederdeckel in Figur 1 weist bei dieser Ausführungsform in seinem Innern radial ausgerichtete Rippen 110 auf. Diese dienen als Gerüst zur Formgebung und Stabilisierung des Luftfederdeckels 103. Der erste und der zweite Klemmbereich zum Verklemmen des ersten Klemmrings 104 und des zweiten Klemmrings 106 erhalten somit Stabilität und gewährleisten eine stabile formschlüssige Verbindungsmethode, welche gleichzeitig eine Abdichtfunktionalität aufweist. Im Zentrum des an den Rippen gebildeten Gerüsts ist das Schaltventil 101 eingebettet. Zur Abdichtung gegen eine äußere Umgebung ist ein erster O-Ring 102 karosserieseitig an der Außenwandung des Schaltventils 101 angebracht. Zur Abdichtung des zweiten Luftvolumens 112 gegenüber dem ersten Luftvolumen 111 ist an der Außenwandung des Schaltventils 101 abrollkolbenseitig ein zweiter O-Ring 113 angebracht.

Innerhalb einer Rippe 110 weist der Luftfederdeckel 103 einen Standardluftanschluss 107 auf. Der Standardluftanschluss 107 ermöglicht, einen zweiten Luftpfad 116 zwischen äußerer Umgebung und dem ersten Luftvolumen 111. Dadurch, dass der Standardluftanschluss 107 innerhalb einer Rippe 110 eingebettet ist, wird wiederum gewährleistet, dass ein Luftaustausch zwischen äußerer Umgebung und dem ersten Luftvolumen 111 unter Umgehung des zweiten Luftvolumens 112 ermöglicht wird.

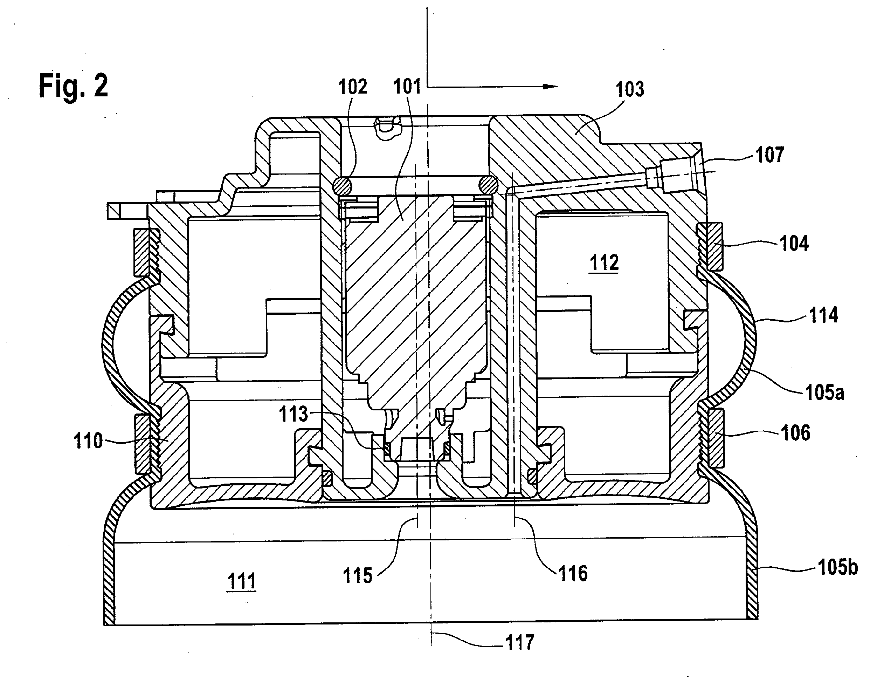

Die Figur 2 zeigt den Luf-tfederdeckel 103 mit integriertem Schaltventil 101 im Längsschnitt. Gestrichelt eingezeichnet ist der erste Luftpfad 115 zwischen dem ersten Luftvolumen 111 und dem zweiten Luftvolumen 112. Dieser wird bei einem definierten Schaltzustand des Schaltventils 101 ermöglicht.

Das Schaltventil 101 ermöglicht weiterhin einen dritten Luftpfad 117 zwischen der äußeren Umgebung und dem ersten Luftvolumen 111 in einem weiteren Schaltzustand.

Der Standardluftanschluss 107 ermöglicht einen zweiten Luftpfad 116 zwischen der äußeren Umgebung und dem ersten Luftvolumen 111.

In der in Figur 2 dargestellten Ausführungsform der Erfindung weist der Luftfederbalg 105a im Bereich des Luftfederdeckels 103 eine Balgfalte 114 auf. Durch die Balgfalte 114 wird der erste Klemmring 104 statisch entlastet. Ausführungsformen der Erfindung in der in Figur 2 dargestellten Art ermöglichen somit, dass der erste Klemmring 104 hinsichtlich Durchmesser und Höhe kleiner ausgestaltet werden kann als der zweite Klemmring 106. Dadurch wird nicht nur Material gespart und das Gewicht des Luftfederdeckels reduziert, sondern dadurch ergeben sich weitere Möglichkeiten der Formgebung des Luftfederdeckels 103.

Nicht dargestellt ist der Einsatz eines dünnen Luftfederbalgs in Kombination mit einer Außenführung. Bei dieser Ausführungsform wäre es erforderlich, dass der obere Bereich des Luftfederbalgs 105a durch "Umbucken" aufgedickt und verstärkt würde, sodass eine Druckbeständigkeit ohne Außenführung möglich wäre. Der Luftfederdeckel 103 kann wie in Figur 1 und Figur 2 ersichtlich, unterschiedliche Bauelemente im Innenbereich aufweisen. Dabei kann es sich um einen einzigen Bestandteil oder um mehrere Bestandteile handeln. Diese Bestandteile können beispielsweise aus nur einem einzigen Kunststoffspritzteil oder aber auch aus einem Gussteil aus einem Metall, wie zum Beispiel Aluminium oder Stahl, bestehen. Dadurch wird in vorteilhafter Weise eine flexible Formgebung des Luftfederdeckels 103 unter Einsparung von Material gewährleistet. Die Form des Luftfederdeckels kann somit an einen zur Verfügung stehenden Bauraum im Fahrzeug angepasst werden. Durch Verzicht auf eine kompakte Bauweise wird das Gewicht des Luftfederdeckels 103 wesentlich reduziert, so dass vorgegebene Gewichtsanforderungen leichter einzuhalten sind.

Ausführungsformen der Erfindung offenbaren einen Luftfederdeckel 103 einer Luftfeder 100, welcher durch Verzicht auf eine kompakte Bauweise und durch Nutzung des Luftfederbalgs 105a als eine Außenwandung des Luftfederdeckels 103 eine verbesserte Luftfeder 100, deren Federsteifigkeit über einen größeren Bereich gespreizt und stärker nuanciert werden kann durch ein bedarfsorientiertes selbstreguläres Zuschalten eines zweiten Luftvolumens 112. Die Bauweise des beschriebenen Luftfederdeckels zeichnet sich durch eine niedrige Komplexität aus. Auf zusätzliche Bauelemente zur Abdichtung des ersten Luftvolumens 111 und des zweiten Luftvolumens 112 kann verzichtet werden, da der erste Klemmring 104 und der zweite Klemmring 106 mitsamt dem Luftfederbalg 105a formschlüssig und luftabdichtend gegen ein stabiles inneres Gerüst des Luftfederdeckels 103 anliegen. Die Anzahl der Herstellungsprozesse wird somit signifikant reduziert. Es wird weniger Material zur, Herstellung des Luftfederdeckels 103 benötigt. Dadurch reduziert sich gleichzeitig das Gewicht des Luftfederdeckels 103 wesentlich. Durch die Möglichkeit einer beliebigen Formgebung des Luftfederdeckels kann eine solche Luftfeder in Fahrzeugtypen verschiedenster Art eingesetzt werden.

### Bezugszeichenliste

- 100: Luftfeder
- 101: Schaltventil
- 102: Erster O-Ring
- 103: Luftfederdeckel
- 104: Erster Klemmring
- 105a, 105b: Luftfederbalg
- 106: zweiter Klemmring
- 107: Standardluftanschluss
- 108: dritter Klemmring
- 109: Abrollkolben
- 110: Rippen
- 111: erstes Luftvolumen
- 112: zweites Luftvolumen
- 113: zweiter O-Ring
- 114: Balgfalte
- 115: Erster Luftpfad
- 116: Zweiter Luftpfad
- 117: Dritter Luftpfad

## Patentansprüche

1. Luftfeder (100) für Fahrwerke von Fahrzeugen, umfassend einen Luftfederdeckel (103) und einen Abrollkolben (109), wobei der Luftfederdeckel (103) und der Abrollkolben (109) durch einen Luftfederbalg (105a, 105b) verbunden sind, wobei der Luftfederdeckel (103) einen ersten karosserieseitigen Klemmbereich und einen zweiten kolbenseitigen Klemmbereich für den Luftfederbalg (105a) aufweist, wobei der erste und der zweite Klemmbereich dazu ausgebildet sind, einen ersten (104) und einen zweiten Klemmring (106) zum Klemmen des Luftfederbalgs (105a) aufnehmen, wobei der erste Klemmring (104) und der zweite Klemmring (106) dazu ausgebildet sind, den Luftfederbalg (105a) am Luftfederdeckel (103) zu fixieren, wobei der Abrollkolben (109) und der Luftfederbalg (105b) in ihrem Innenraum ein gemeinsames erstes Luftvolumen (111) aufweisen, wobei der Abrollkolben (109) an seinem fahrwerkseitigem Ende einen dritten Klemmbereich aufweist, wobei der dritte Klemmbereich dazu ausgebildet ist, einen dritten Klemmring (108) aufzunehmen, wobei der dritte Klemmring (108) dazu ausgebildet ist, das erste Luftvolumen (111) gegenüber der äußeren Umgebung abzudichten, wobei der Luftfederdeckel (100) ein zweites Luftvolumen (112) aufweist, wobei der Luftfederbalg (105a, 105b) eine Außenwandung des ersten (111) und des zweiten Luftvolumens (112) bildet, so dass das erste (111) und das zweite Luftvolumen (112) gegenüber einer äußeren Umgebung abgedichtet werden, wobei der zweite Klemmring (106) so angeordnet ist, dass das erste Luftvolumen (111) räumlich von dem zweiten Luftvolumen (112) getrennt ist, wobei der Luftfederdeckel (103) dazu ausgebildet ist, ein Schaltventil (101) aufzunehmen, welches dazu ausgebildet ist, in einem Schaltzustand einen ersten Luftpfad (115) zwischen dem ersten (111) und dem zweiten Luftvolumen (112) zu ermöglichen, so dass das zweite Luftvolumen (112) zum ersten Luftvolumen (111) zuschaltbar ist.

2. Luftfeder (100) nach Anspruch 1, wobei das Schaltventil (101) ferner dazu ausgebildet ist, an seiner Außenwand einen ersten und einen zweiten O-Ring (113) aufzunehmen, wobei der erste O-Ring (102) dazu ausgebildet ist, das zweite Luftvolumen (112) gegen eine äußere Umgebung abzudichten, wobei der zweite O-Ring (113) dazu ausgebildet ist, das zweite Luftvolumen (112) gegen das erste Luftvolumen (111) abzugrenzen.

3. Luftfeder (100) nach einem der vorhergehenden Ansprüche, wobei der Luftfederdeckel (103) dazu ausgebildet ist, einen zweiten Luftpfad (116)zwischen dem ersten Luftvolumen und der äußeren Umgebung unter Umgehung des zweiten Luftvolumen (112)und unter Umgehung des Schaltventil (101)s zu ermöglichen.

4. Luftfeder (100) nach einem der vorhergehenden Ansprüche, wobei das Schaltventil (101) ferner dazu ausgebildet ist, einen dritten Luftpfad (117) zwischen dem ersten Luftvolumen (111) und der äußeren Umgebung zu ermöglichen.

5. Luftfeder (100) nach einem der vorhergehenden Ansprüche, wobei der Luftfederdeckel (103) mindestens ein Bestandteil aufweist, wobei der mindestens eine Bestandteil des Luftfederdeckels (103) ein Kunststoffspritzteil und/oder ein Metallteil ist.

6. Luftfeder (100) nach einem der vorhergehenden Ansprüche, wobei der erste (104) und der zweite Klemmring (106) bezüglich ihres Durchmessers und/oder ihrer Höhe identisch oder unterschiedlich ausgeprägt sind.

7. Luftfeder (100) nach einem der vorhergehenden Ansprüche, wobei der Luftfederdeckel (103) und der Abrollkolben (109) durch einen Bajonettverschluss, durch Zusammenschrauben, durch Zusammenkleben und/oder durch Zusammenklemmen miteinander verbunden sind.

8. Luftfeder (100) nach einem der vorhergehenden Ansprüche, wobei der Luftfederdeckel (103) mindestens zwei Bestandteile aufweist, wobei die Bestandteile miteinander fest verschweißt sind.

9. Luftfeder (100) nach einem der vorhergehenden Ansprüche, wobei der Luftfederbalg (105a, 105b) mindestens eine Lage von Gewebefestigkeitsträgern aufweist, wobei die Gewebefestigkeitsträger Fadenverstärkungen aufweist, wobei eine Vorzugsachse der Fadenverstärkungen parallel, senkrecht oder schräg zu einer Längsachse der Luftfeder (100) verlaufen.

10. Luftfeder (100) nach einem der vorhergehenden Ansprüche, wobei der erste und der zweite Klemmbereich durch Rippen (110) radial versteift sind.

11. Luftfeder (100) nach einem der vorhergehenden Ansprüche, wobei der zweite Luftpfad zwischen dem ersten Luftvolumen und der äußeren Umgebung innerhalb einer Rippe (110) der Rippen (110) liegt.

12. Luftfeder (100) nach Anspruch 1, wobei Formen des Luftfederdeckels (103), des Abrollkolbens (109) und/oder des Luftfederbalgs (105a) einem Einbaubereich in einem Fahrzeug angepasst werden können.

13. Luftfeder (100) nach Anspruch 1, wobei der Luftfederbalg (105a) zwischen dem ersten (104) und dem zweiten Klemmring (106) zu einer Falte (114) ausgebildet ist.

14. Kraftfahrzeugfahrwerk mit mindestens einer Luftfeder (100) nach Anspruch 1.

15. Kraftfahrzeug mit Karosserie und Fahrwerk mit mindestens einer Luftfeder (100) nach Anspruch 14.

## Claims

1. Air spring (100) for vehicle running gear, comprising an air spring cover (103) and a rolling piston (109), wherein the air spring cover (103) and the rolling piston (109) are connected by an air spring bellows (105a, 105b), wherein the air spring cover (103) has a first, body-side clamping region and a second, piston-side clamping region for the air spring bellows (105a), wherein the first and the second clamping region are designed to receive a first clamping ring (104) and a second clamping ring (106) for clamping the air spring bellows (105a), wherein the first clamping ring (104) and the second clamping ring (106) are designed to fix the air spring bellows (105a) on the air spring cover (103), wherein the rolling piston (109) and the air spring bellows (105b) have a common first air volume (111) in the inner space thereof, wherein the end of the rolling piston (109) closest to the running gear has a third clamping region, wherein the third clamping region is designed to receive a third clamping ring (108), wherein the third clamping ring (108) is designed to seal off the first air volume (111) from the external environment, wherein the air spring cover (103) has a second air volume (112), wherein the air spring bellows (105a, 105b) forms an outer wall of the first air volume (111) and of the second air volume (112), with the result that the first air volume (111) and the second air volume (112) are sealed off from an external environment, wherein the second clamping ring (106) is arranged in such a way that the first air volume (111) is spatially separated from the second air volume (112), wherein the air spring cover (103) is designed to accommodate a switching valve (101), which is designed to allow a first air path (115) between the first air volume (111) and the second air volume (112) in one operating state, thus enabling the second air volume (112) to be linked to the first air volume (111).

2. Air spring (100) according to Claim 1, wherein the switching valve (101) is furthermore designed to receive, on the outer wall thereof, a first and a second O-ring (113), wherein the first O-ring (102) is designed to seal off the second air volume (112) from an external environment, wherein the second O-ring (113) is designed to delimit the second air volume (112) with respect to the first air volume (111).

3. Air spring (100) according to one of the preceding claims, wherein the air spring cover (103) is designed to allow a second air path (116) between the first air volume and the external environment while bypassing the second air volume (112) and while bypassing the switching valve (101).

4. Air spring (100) according to one of the preceding claims, wherein the switching valve (101) is furthermore designed to allow a third air path (117) between the first air volume (111) and the external environment.

5. Air spring (100) according to one of the preceding claims, wherein the air spring cover (103) has at least one component part, wherein the at least one component part of the air spring cover (103) is an injection molded plastic part and/or a metal part.

6. Air spring (100) according to one of the preceding claims, wherein the first clamping ring (104) and the second clamping ring (106) are of identical or different configuration in respect of the diameter and/or height thereof.

7. Air spring (100) according to one of the preceding claims, wherein the air spring cover (103) and the rolling piston (109) are connected to one another by a bayonet joint, by screwing, by adhesive bonding and/or by clamping.

8. Air spring (100) according to one of the preceding claims, wherein the air spring cover (103) has at least two component parts, wherein the component parts are welded securely to one another.

9. Air spring (100) according to one of the preceding claims, wherein the air spring bellows (105a, 105b) has at least one layer of fabric strength members, wherein the fabric strength members have fiber reinforcements, wherein a preferential axis of the fiber reinforcements extends parallel, perpendicularly or obliquely to a longitudinal axis of the air spring (100).

10. Air spring (100) according to one of the preceding claims, wherein the first and the second clamping region are reinforced radially by ribs (110).

11. Air spring (100) according to one of the preceding claims, wherein the second air path is situated between the first air volume and the external environment, within one rib (110) of the ribs (110).

12. Air spring (100) according to Claim 1, wherein shapes of the air spring cover (103), of the rolling piston (109) and/or of the air spring bellows (105a) can be matched to an installation region in a vehicle.

13. Air spring (100) according to Claim 1, wherein the air spring bellows (105a) is formed into a fold (114) between the first clamping ring (104) and the second clamping ring (106).

14. Motor vehicle running gear having at least one air spring (100) according to Claim 1.

15. Motor vehicle having a body and running gear having at least one air spring (100) according to Claim 14.

## Revendications

1. Ressort pneumatique (100) pour châssis de véhicules, comprenant un couvercle de ressort pneumatique (103) et un piston déroulant (109), le couvercle de ressort pneumatique (103) et le piston déroulant (109) étant connectés par un soufflet de ressort pneumatique (105a, 105b), le couvercle de ressort pneumatique (103) présentant une première région de serrage du côté de la carrosserie et une deuxième région de serrage du côté du piston pour le soufflet de ressort pneumatique (105a), la première et la deuxième région de serrage étant réalisées de manière à recevoir une première (104) et une deuxième (106) bague de serrage pour serrer le soufflet de ressort pneumatique (105a), la première bague de serrage (104) et la deuxième bague de serrage (106) étant réalisées de manière à fixer le soufflet de ressort pneumatique (105a) au couvercle de ressort pneumatique (103), le piston déroulant (109) et le soufflet de ressort pneumatique (105b) présentant, dans leur espace intérieur, un premier volume d'air commun (111), le piston déroulant (109) présentant, au niveau de son extrémité du côté du châssis, une troisième région de serrage, la troisième région de serrage étant réalisée pour recevoir une troisième bague de serrage (108), la troisième bague de serrage (108) étant réalisée de manière à étanchéifier le premier volume d'air (111) par rapport à l'environnement extérieur, le couvercle de ressort pneumatique (103) présentant un deuxième volume d'air (112), le soufflet de ressort pneumatique (105a, 105b) formant une paroi extérieure du premier (111) et du deuxième (112) volume d'air, de telle sorte que le premier (111) et le deuxième (112) volume d'air soient étanchéifiés vis-à-vis d'un environnement extérieur, la deuxième bague de serrage (106) étant disposée de telle sorte que le premier volume d'air (111) soit séparé spatialement du deuxième volume d'air (112), le couvercle de ressort pneumatique (103) étant réalisé de manière à recevoir une soupape de commutation (101) qui est réalisée de manière à permettre, dans un état de commutation, un premier chemin d'air (115) entre le premier (111) et le deuxième (112) volume d'air, de sorte que le deuxième volume d'air (112) puisse être raccordé au premier volume d'air (111).

2. Ressort pneumatique (100) selon la revendication 1, dans lequel la soupape de commutation (101) est en outre réalisée de manière à recevoir au niveau de sa paroi extérieure un premier et un deuxième joint torique (113), le premier joint torique (102) étant réalisé de manière à étanchéifier le deuxième volume d'air (112) par rapport à un environnement extérieur, le deuxième joint torique (113) étant réalisé de manière à limiter le deuxième volume d'air (112) par rapport au premier volume d'air (111).

3. Ressort pneumatique (100) selon l'une quelconque des revendications précédentes, dans lequel le couvercle de ressort pneumatique (103) est réalisé de manière à permettre un deuxième chemin d'air (116) entre le premier volume d'air et l'environnement extérieur en contournant le deuxième volume d'air (112) et en contournant la soupape de commutation (101).

4. Ressort pneumatique (100) selon l'une quelconque des revendications précédentes, dans lequel la soupape de commutation (101) est en outre réalisée de manière à permettre un troisième chemin d'air (117) entre le premier volume d'air (111) et l'environnement extérieur.

5. Ressort pneumatique (100) selon l'une quelconque des revendications précédentes, dans lequel le couvercle de ressort pneumatique (103) présente au moins un composant, l'au moins un composant du couvercle de ressort pneumatique (103) étant une pièce moulée par injection de plastique et/ou une pièce métallique.

6. Ressort pneumatique (100) selon l'une quelconque des revendications précédentes, dans lequel la première (104) et la deuxième (106) bague de serrage sont façonnées de manière identique ou différente en termes de leur diamètre et/ou de leur hauteur.

7. Ressort pneumatique (100) selon l'une quelconque des revendications précédentes, dans lequel le couvercle de ressort pneumatique (103) et le piston déroulant (109) sont connectés l'un à l'autre par une fermeture à baïonnette, par vissage, par collage et/ou par serrage.

8. Ressort pneumatique (100) selon l'une quelconque des revendications précédentes, dans lequel le couvercle de ressort pneumatique (103) présente au moins deux composants, les composants étant soudés fixement l'un à l'autre.

9. Ressort pneumatique (100) selon l'une quelconque des revendications précédentes, dans lequel le soufflet de ressort pneumatique (105a, 105b) présente au moins une couche de renforts en tissu, les renforts en tissu présentant des renforts de fil, un axe préférentiel des renforts de fil s'étendant parallèlement, perpendiculairement ou obliquement par rapport à un axe longitudinal du ressort pneumatique (100).

10. Ressort pneumatique (100) selon l'une quelconque des revendications précédentes, dans lequel la première et la deuxième région de serrage sont rigidifiées radialement par des nervures (110).

11. Ressort pneumatique (100) selon l'une quelconque des revendications précédentes, dans lequel le deuxième chemin d'air est situé entre le premier volume d'air et l'environnement extérieur à l'intérieur d'une nervure (110) parmi les nervures (110).

12. Ressort pneumatique (100) selon la revendication 1, dans lequel des formes du couvercle de ressort pneumatique (103), du piston déroulant (109) et/ou du soufflet de ressort pneumatique (105a) peuvent être adaptées à une région de montage dans un véhicule.

13. Ressort pneumatique (100) selon la revendication 1, dans lequel le soufflet de ressort pneumatique (105a) est réalisé entre la première (104) et la deuxième (106) bague de serrage pour produire un pli (114).

14. Châssis de véhicule automobile comprenant au moins un ressort pneumatique (100) selon la revendication 1.

15. Véhicule automobile comprenant une carrosserie et un châssis comprenant au moins un ressort pneumatique (100) selon la revendication 14.
